# EUROPEAN PATENT SPECIFICATION

(11) **EP 1 629 030 B1**
(45) Date of publication and mention of the grant of the patent: **27.09.2006**
(21) Application number: 04741680.5
(22) Date of filing: 01.06.2004
(51) Int. Cl.: C08J 3/12, C08L 1/28, C08B 11/20, B01J 2/22

(54) **CARBOXYMETHYLCELLULOSE HAVING IMPROVED SOLUBILITY IN WATER**
CARBOXYMETHYLCELLULOSE MIT VERBESSERTER LÖSLICHKEIT IM WASSER
CARBOXYMETHYLCELLULOSE A DISSOLUTION RAPIDE

(30) Priority: 03.06.2003 IT VA20030017
(43) Date of publication of application: 01.03.2006
(73) Proprietor: Lamberti Spa, 21041 Albizzate (IT)
(72) Inventor: DEMARCHI, Cristina, IT-I-28043 Bellinzago (NO) (IT); LI BASSI, Giuseppe, I-21026 Gavirate (IT)
(86) International application number: PCT/EP2004/050964
(87) International publication number: WO 2004/106415

(56) References cited:
- US-A- 4 507 473
- PATENT ABSTRACTS OF JAPAN vol. 0020, no. 85 (C-017), 12 July 1978 (1978-07-12) -& JP 53 045357 A (DAICEL CHEM IND LTD), 24 April 1978 (1978-04-24) -& DATABASE CHEMABS [Online] CHEMICAL ABSTRACTS SERVICE, COLUMBUS, OHIO, US; 1984, XP002298338 retrieved from STN Database accession no. 1978:460679
- PATENT ABSTRACTS OF JAPAN vol. 0183, no. 17 (M-1622), 16 June 1994 (1994-06-16) & JP 6 071643 A (NIPPON PAPER IND CO LTD), 15 March 1994 (1994-03-15)

## Description

The present invention relates to a procedure for the preparation of granulated carboxymethylcellulose which dissolves rapidly in water.

Carboxymethylcellulose is usually commercialised in the form of powder and used as thickener in numerous water based formulations.

It is well known that many problems are encountered while dissolving water soluble polysaccharides.

The formation of lumps is one of these problems, because lumps strongly increase the time needed to reach the maximum viscosity of the solution.

Another problem is the generation of foams, which is due to the incorporation of large amount of air in the solution.

To solve these problems it is necessary to adopt technical devices, such as heating the water, conducting the dissolution at reduced pressure, choosing particular stirring facilities; all this, causes practical difficulties and increases the overall operation costs.

The presence of fine powders in the air is another problem connected with the dissolution in water of polysaccharides.

In US 6,294,665 (FUJI OIL CO., LTD) a procedure especially directed to the solution of the above cited problems is described; the procedure is based on the use of a solution comprising an emulsifier, among other essential constituents.

It has now been found, and it constitutes a fundamental object of the present invention, that it is possible to obtain a granulated carboxymethylcellulose which rapidly dissolves in water, by granulating carboxymethylcellulose in the form of powder in admixture with an aqueous solution of low viscosity carboxymethylcellulose.

In the present text, with the expression "carboxymethylcellulose in the form of powder" we mean carboxymethylcellulose having particle size of at least 90 wt% (percent by weight) finer than 1 mm; with the expression "low viscosity carboxymethylcellulose" we mean carboxymethylcellulose having Brookfield viscosity comprised between 1,000 and 6,000 mPa*s at 25 wt% and 20 rpm.

Surprisingly, the admixture of carboxymethylcellulose in the form of powder and of the aqueous solution of low viscosity carboxymethylcellulose according to the invention eliminates the necessity of using an emulsifier in the granulating step.

This feature is very advantageous, because the presence of undesired substances (emulsifiers) in the finished product is thereby avoided.

The granulated carboxymethylcellulose of the invention, beside being fast dissolvable in water, does not lead to the formation of lumps and foams, when dissolved, and of dusting, when handled.

According to a fundamental aspect of the present invention, the low viscosity carboxymethylcellulose, which is used in the form of an aqueous solution in the granulation, has Brookfield viscosity comprised between 1,000 and 6,000 mPa*s, preferably between 3,000 and 4,000 mPa*s at 25 wt% and 20 rpm.

According to another fundamental aspect of the invention, the aqueous solution of low viscosity carboxymethylcellulose used in the granulation contains from 5 to 20 wt% of low viscosity carboxymethylcellulose, preferably from 10 to 15 wt%.

For the realisation of the present invention, the weight ratio between the carboxymethylcellulose in the form of powder and the aqueous solution of low viscosity carboxymethylcellulose is comprised between 3.0 and 5, preferably between 3.2 and 4.5.

The carboxymethylcellulose in the form of powder to be granulated has a substitution degree (DS) comprised between 0.4 and 1.2 and Brookfield viscosity comprised between 30 and 30,000 mPa*s at 2 wt% and 60 rpm.

The carboxymethylcellulose in the form of powder that can be utilised in the procedure according to the invention has a maximum water content of 10 wt%.

The granulating methods utilisable to obtain the fast dissolving granulated carboxymethylcellulose are those commonly in use in this field; in particular, the carboxymethylcellulose in the form of powder can be granulated by means of a fluidised bed, a rolling, a spray drying or a stirring granulating method.

Preferably, the granulation of carboxymethylcellulose in the form of powder according to the invention is performed by means of a rolling granulating apparatus having a stirring speed comprised between 200 and 300 rpm.

Another advantage of the procedure of the invention is the fact that the granules of carboxymethylcellulose obtained have a regular structure, and are accompanied by a very low percentage of non-granulated fine powder.

As a conclusion, the use of the procedure for the granulation of carboxymethylcellulose according to the invention, allows to shorten the dissolution time of the granulated carboxymethylcellulose and to avoid the formation of foams and dusting during operations.

The following examples illustrate embodiments of the invention and are not intended to unduly limit the invention itself.

Example 1.

100 parts by weight of carboxymethylcellulose in the form of powder (DS= 0.6 and Brookfield viscosity of 52 mPa*s at 2 wt% and 60 rpm) are granulated with a rolling granulating apparatus (rotating speed 250 rpm) with 30 parts by weight of a 12.5 wt% aqueous solution of carboxymethylcellulose (DS= 0.6 and Brookfield viscosity of 3,200 mPa*s at 25 wt% and 20 rpm), the aqueous solution having Brookfield viscosity of 86 mPa*s at 60 rpm.

Example 2.

100 parts by weight of carboxymethylcellulose in the form of powder (DS= 1.0 and Brookfield viscosity of 6,220 mPa*s at 2 wt% and 60 rpm) are granulated with a rolling granulating apparatus (rotating speed 250 rpm) with 27 parts by weight of a 12.5 wt% aqueous solution of carboxymethylcellulose (DS= 0.6 and Brookfield viscosity of 3,100 mPa*s at 25 wt% and 20 rpm), the aqueous solution having Brookfield viscosity of 73 mPa*s at 60 rpm.

Example 3.

100 parts by weight of carboxymethylcellulose in the form of powder (DS= 0.8 and Brookfield viscosity of 906 mPa*s at 2 wt% and 60 rpm) are granulated with a rolling granulating apparatus (rotating speed 275 rpm) with 25 parts by weight of a 12.5 wt% aqueous solution of carboxymethylcellulose (DS= 0.6 and Brookfield viscosity of 3,900 mPa*s at 25 wt% and 20 rpm), the aqueous solution having Brookfield viscosity of 102 mPa*s at 60 rpm.

Testing dissolution time, formation of lumps and foams.

350 ml of demineralised water are poured in a 500 ml becker, and 2.5 g of granulated carboxymethylcellulose are added.

The mixture is slowly stirred with a magnetic stirrer, visually determining the time when complete dissolution is reached and verifying the occasional presence of foams.

The presence of lumps is determined by filtering the solution with a 2 mm sieve.

Testing dusting behaviour.

100 g of granulated carboxymethylcellulose are placed in a 1l transparent jar; the jar is capped and repeatedly turned upside down during 15 seconds. The jar is then allowed to stand still and immediately the presence of dusting inside the jar is observed.

Testing particle-size.

The particle-size testing is made by sieving .

In the following tables (Table 1 and Table 2), the essential features of the examples and the results of the tests are respectively reported.

**Table 1**

| Example | V_{CMC} | Gₒ | DS_{CMC} | V_{CMCsol} | Vₛₒₗ | DS_{CMCsol} | P_{CMC}/Pₛₒₗ |
|---|---|---|---|---|---|---|---|
| 1 | 52 | 47 | 0.6 | 3,200 | 86 | 0.6 | 3.3 |
| 2 | 6,220 | 0 | 1.0 | 3,100 | 73 | 0.6 | 3.7 |
| 3 | 906 | 39 | 0.8 | 3,900 | 102 | 0.6 | 4.0 |

| | | | | | | | |
|---|---|---|---|---|---|---|---|
| V_{CMC} = Brookfield viscosity of the carboxymethylcellulose in the form of powder, in mPa*s (60 rpm, 2 wt%) . Go = Particle-size of the carboxymethylcellulose in the form of powder (wt% of particles from 1 to 0.355 mm) DS_{CMC} = Degree of substitution of the carboxymethylcellulose in the form of powder V_{CMCsol} = Brookfield viscosity of the low viscosity carboxymethylcellulose, in mPa*s (20 rpm, 25 wt%). Vₛₒₗ = Brookfield viscosity of the 12.5 wt% aqueous solution of low viscosity carboxymethylcellulose DS_{CMCsol} = Degree of substitution of the low viscosity carboxymethylcellulose P_{CMC}/Pₛₒₗ= Weight ratio between the carboxymethylcellulose in the form of powder and the aqueous solution of low viscosity carboxymethylcellulose. | | | | | | | |

**Table 2**

| Example | T_{diss}. | Lumps | Dusting | Foams | G |
|---|---|---|---|---|---|
| 1 | 10 | None | None | None | 79 |
| 2 | 12 | None | None | None | 85 |
| 3 | 9 | None | None | None | 81 |

| | | | | | |
|---|---|---|---|---|---|
| T_{diss.} = Dissolution time in minutes G = Particle-size of the granulated carboxymethylcellulose (wt% of particles from 1 to 0.355 mm) | | | | | |

## Claims

1. Procedure for the granulation of carboxymethylcellulose in the form of powder having a degree of substitution (DS) comprised between 0.4 and 1.2 and Brookfield viscosity comprised between 30 and 30,000 mPa*s at 2 wt% and 60 rpm, **characterised by** the fact that the granulation is performed by mixing the carboxymetylcellulose in the form of powder with an aqueous solution containing from 5 to 20 wt% of low viscosity carboxymetylcellulose having Brookfield viscosity comprised between 1,000 and 6,000 mPa*s at 25 wt% and 20 rpm, the weight ratio between the carboxymethylcellulose in the form of powder and the aqueous solution of low viscosity carboxymethylcellulose being comprised between 3.0 and 5.

2. Procedure for the granulation of carboxymethylcellulose in the form of powder according to claim 1., wherein the low viscosity carboxymethylcellulose has Brookfield viscosity comprised between 3,000 and 4,000 mPa*s at 25 wt% and 20 rpm.

3. Procedure for the granulation of carboxymethylcellulose in the form of powder according to claim 2., wherein the aqueous solution contains from 10 to 15 wt% of low viscosity carboxymethylcellulose.

4. Procedure for the granulation of carboxymethylcellulose in the form of powder according to claim 3., wherein the weight ratio between the carboxymethylcellulose in the form of powder and the aqueous solution of low viscosity carboxymethylcellulose is comprised between 3.2 and 4.5.

5. Procedure for the granulation of carboxymethylcellulose in the form of powder according to claim 4., wherein the carboxymethylcellulose in the form of powder has a maximum water content of 10 wt%.

## Patentansprüche

1. Prozedur zur Körnung von Carboxymethylcellulose in Pulverform mit einem Substitutionsgrad (DS) zwischen 0.4 und 1.2 und einer Brookfield-Viskosität zwischen 30 und 30,000 mPas bei 2% Gewichtsanteilen und Drehzahl 60, **dadurch gekennzeichnet, dass** man die Körnung durch Mischen der Carboxymethylcellulose in Pulverform mit einer wässrigen Lösung enthält, die zwischen 5 und 20% Gewichtsanteile einer niederviskosen Carboxymethylcellulose mit Brookfield-Viskosität zwischen 1,000 und 6,000 mPas bei 25% Gewichtsanteilen und Drehzahl 20 enthält, wobei der Gewichtsanteil zwischen der Carboxymethylcellulose in Pulverform und der wässrigen Lösung der niederviskosen Carboxymethylcellulose zwischen 3.0 und 5 liegt.

2. Prozedur zur Körnung von Carboxymethylcellulose in Pulverform entsprechend Patentanspruch 1., worin die niederviskose Carboxymethylcellulose eine Brookfield-Viskosität zwischen 3,000 und 4,000 mPas bei 25% Gewichtsanteilen und Drehzahl 20 aufweist.

3. Prozedur zur Körnung von Carboxymethylcellulose in Pulverform entsprechend Patentanspruch 2., worin die wässrige Lösung zwischen 10 und 15% Gewichtsanteile niederviskoser Carboxymethylcellulose enthält.

4. Prozedur zur Körnung von Carboxymethylcellulose in Pulverform entsprechend Patentanspruch 3., wobei der Gewichtsanteil zwischen der Carboxymethylcellulose in Pulverform und der wässrigen Lösung der niederviskosen Carboxymethylcellulose zwischen 3.2 und 4.5 liegt.

5. Prozedur zur Körnung von Carboxymethylcellulose in Pulverform entsprechend Patentanspruch 4., worin die Carboxymethylcellulose in Pulverform einen maximalen Wassergehalt von 10% Gewichtsanteilen aufweist.

## Revendications

1. Procédé de granulation de carboxyméthylcellulose sous forme de poudre ayant un degré de substitution (DS) compris entre 0,4 et 1,2 et une viscosité Brookfield comprise entre 30 et 30 000 mPa*s à 2 % en poids et 60 tr/min, ledit procédé étant **caractérisé en ce que** la granulation s'effectue par mélange de la carboxyméthylcellulose sous forme de poudre avec une solution aqueuse contenant de 5 à 20 % en poids de carboxyméthylcellulose ayant une viscosité Brookfield comprise entre 1000 et 6000 mPa*s à 25 % en poids et 20 tr/min, le rapport pondéral entre la carboxyméthylcellulose sous forme de poudre et la solution aqueuse de carboxyméthylcellulose de faible viscosité étant compris entre 3,0 et 5.

2. Procédé de granulation de carboxyméthylcellulose sous forme de poudre selon la revendication 1, la carboxyméthylcellulose de faible viscosité ayant une viscosité Brookfield comprise entre 3000 et 4000 mPa*s à 25 % en poids et 20 tr/min.

3. Procédé de granulation de carboxyméthylcellulose sous forme de poudre selon la revendication 2, la solution aqueuse contenant de 10 à 15 % en poids de carboxyméthylcellulose de faible viscosité.

4. Procédé de granulation de carboxyméthylcellulose sous forme de poudre selon la revendication 3, le rapport pondéral entre la carboxyméthylcellulose sous forme de poudre et la solution aqueuse de carboxyméthylcellulose de faible viscosité étant compris entre 3,2 et 4,5.

5. Procédé de granulation de carboxyméthylcellulose sous forme de poudre selon la revendication 4, la carboxyméthylcellulose sous forme de poudre présentant une teneur maximum en eau de 10 % en poids.
